# EUROPEAN PATENT APPLICATION

(11) **EP 3 998 771 A1**
(43) Date of publication of application: **18.05.2022**
(21) Application number: 20922291.8
(22) Date of filing: 28.12.2020
(51) Int. Cl.: H04N 7/18, B64G 1/66

(54) **OBSERVATION CONTROL DEVICE, OBSERVATION SYSTEM, SPACECRAFT, OBSERVATION CONTROL METHOD, AND OBSERVATION CONTROL PROGRAM**

(30) Priority: 27.02.2020 JP 2020032256
(71) Applicant: Mitsubishi Heavy Industries, Ltd., Chiyoda-ku, Tokyo 100-8332 (JP)
(72) Inventor: ANDO, Keisuke, Tokyo 100-8332 (JP); YAMADA, Takahiro, Tokyo 100-8332 (JP); MASUKAWA, Kazunori, Tokyo 100-8332 (JP); KAWATO, Hiroshi, Tokyo 100-8332 (JP)
(74) Representative: Hoffmann Eitle
(86) International application number: PCT/JP2020/049241
(87) International publication number: WO 2021/171781

(57) **Abstract**

The purpose of the present invention is to provide an observation control device, an observation system, a spacecraft, an observation control method, and an observation control program which enable stable observation. An observation control device 60 applicable to a plurality of sensor systems (#1 to #n) mounted on a spacecraft for the purpose of observation is provided with: a determination unit that determines whether each of the sensor systems (#1 to #n) is in a normal observable state; and an adjustment unit that, when at least one of the sensor systems (#1 to #n) is determined not to be in a normal observable state, adjusts the allocation state of a target searching and/or tracking function in sensors, among the sensor systems (#1 to #n), determined to be in the normal observable state.

## Description

### Technical Field

The present disclosure relates to an observation control device, an observation system, a spacecraft, an observation control method, and an observation control program.

### Background Art

A spacecraft such as an artificial satellite observes the earth using a mounted sensor. In the observation of the earth, a method for performing scanning along with the movement of an artificial satellite with a direction of observation by a sensor fixed, a method for performing scanning in a direction perpendicular to a traveling direction, and the like are adopted (for example, PTL 1).

### Citation List

### Patent Literature

[PTL 1] Japanese Unexamined Patent Application Publication No. 11-234547

### Summary of Invention

### Technical Problem

However, when an abnormality or the like has occurred in a sensor and normal observation is not feasible, observation cannot be performed. Specifically, in a spacecraft, each sensor plays a dedicated role, and when a sensor fails, observation corresponding to the role played by the sensor cannot be performed. When such a malfunction has occurred, the launching of an alternative spacecraft or the like is required.

The present disclosure is conceived in view of such circumstances, and an object of the present disclosure is to provide an observation control device, an observation system, a spacecraft, an observation control method, and an observation control program capable of more stably performing observation.

### Solution to Problem

According to a first aspect of the present disclosure, there is provided An observation control device that is applicable to a plurality of detection devices mounted in a spacecraft to perform observation, the device including: a determination unit that determines whether or not normal observation is feasible in each of the detection devices; and an adjustment unit that adjusts an assignment state of a target searching function and/or a target tracking function for each of the detection devices when it is determined that normal observation is not feasible in at least one of the detection devices.

According to a second aspect of the present disclosure, there is provided an observation control method that is applicable to a plurality of detection devices mounted in a spacecraft to perform observation, the method including: a step of determining whether or not normal observation is feasible in each of the detection devices; and a step of adjusting an assignment state of a target searching function and/or a target tracking function for each of the detection devices when it is determined that normal observation is not feasible in at least one of the detection devices.

According to a third aspect of the present disclosure, there is provided an observation control program that is applicable to a plurality of detection devices mounted in a spacecraft to perform observation, the program causing a computer to execute: a process of determining whether or not normal observation is feasible in each of the detection devices; and a process of adjusting an assignment state of a target searching function and/or a target tracking function for each of the detection devices when it is determined that normal observation is not feasible in at least one of the detection devices.

### Advantageous Effects of Invention

According to the present disclosure, observation can be more stably performed.

### Brief Description of Drawings

Fig. 1 is a diagram illustrating an example of observation by an artificial satellite according to one embodiment of the present disclosure.
Fig. 2 is a functional block diagram illustrating functions of a sensor system according to one embodiment of the present disclosure.
Fig. 3 is a diagram illustrating one example of a hardware configuration in an observation control device according to one embodiment of the present disclosure.
Fig. 4 is a functional block diagram illustrating functions of the observation control device according to one embodiment of the present disclosure.
Fig. 5 is a diagram illustrating an example of adjusting a function assignment state according to one embodiment of the present disclosure.
Fig. 6 is a diagram illustrating one example of searching by the observation control device according to one embodiment of the present disclosure.
Fig. 7 is a diagram illustrating one example of tracking by the observation control device according to one embodiment of the present disclosure.
Fig. 8 is a diagram illustrating a flowchart of observation control according to one embodiment of the present disclosure.

### Description of Embodiments

Hereinafter, one embodiment of an observation control device, an observation system, a spacecraft, an observation control method, and an observation control program according to the present disclosure will be described with reference to the drawings. An observation control device 60 according to the present embodiment is applied to a spacecraft. Namely, the observation control device 60 is applicable to an artificial object (spacecraft) that is assumed to be used in outer space, for example, an artificial satellite and the like. In the present embodiment, a case where the observation control device 60 is mounted in a spacecraft will be described as an example; however, the observation control device 60 may be mounted in a ground station and adapted to a spacecraft by transmitting and receiving signals.

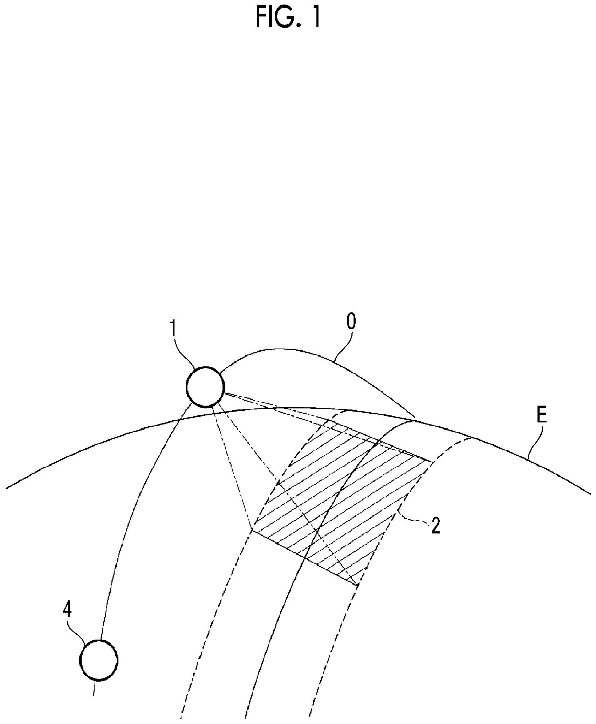

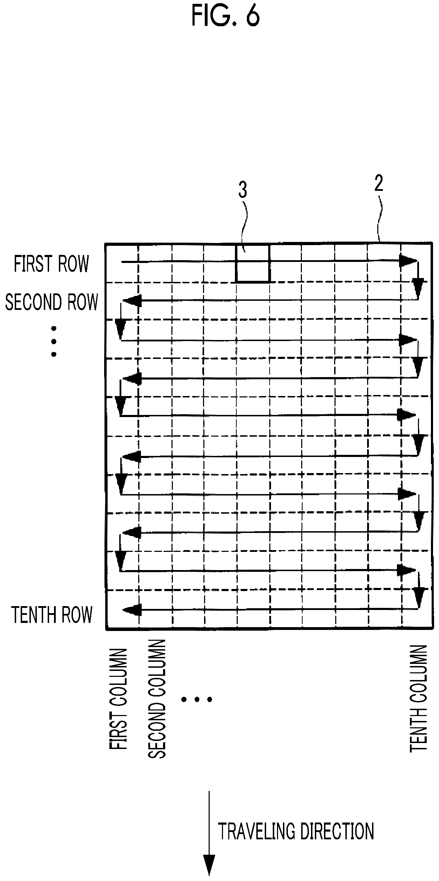

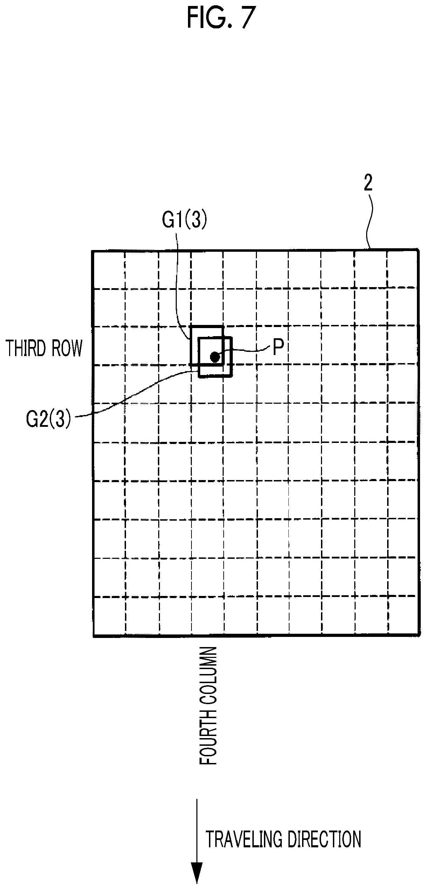

Fig. 1 is a diagram illustrating one example of a case where observation is performed by an artificial satellite 1 equipped with the observation control device 60 according to one embodiment of the present disclosure. In Fig. 1, the artificial satellite 1 moves around earth E along a trajectory O. The trajectory O is not limited to, for example, a low earth trajectory (LEO), a medium earth trajectory (MEO), or the like. The artificial satellite 1 performs observation in a direction from the position of the artificial satellite 1 in outer space to the earth E (direction of the earth). Observation is performed by a detection device to be described later. As illustrated in Fig. 1, the artificial satellite 1 is capable of performing observation in a scanning range 2. Namely, an observation range 3 can be moved in the scanning range 2 as illustrated in Fig. 6 or 7 to be described later. In other words, any region in the scanning range 2 can be observed.

For example, as illustrated in Fig. 1, another artificial satellite such as an artificial satellite 4 may move around the earth E and perform observation in the trajectory O or another trajectory. A ground station may be provided on the earth E, and observation may be performed from the ground as well. Namely, in addition to the artificial satellite 1, a facility that performs observation may be provided. Then, the artificial satellite 1 may be capable of exchanging information with another facility that performs observation (for example, the artificial satellite 4, a ground station, or the like).

An observation device (observation system) 50 performs comprehensive control (observation control) for observation on a plurality of sensor systems to execute observation.

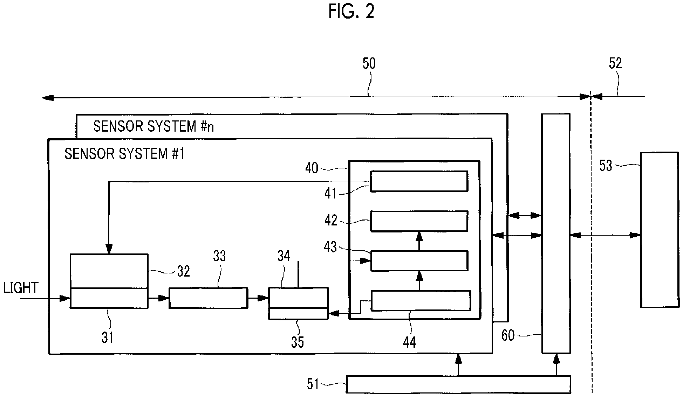

Fig. 2 is a functional block diagram illustrating functions of the observation device 50. The observation device 50 includes the plurality of sensor systems (detection devices) and the observation control device 60. As illustrated in Fig. 2, n sensor systems including #1 to #n systems are provided. Electric power is supplied to each part from, for example, a power supply circuit 51.

Then, the observation device 50 is connected to a higher-level control device 53 via a bus unit 52, so that information (signal) to the observation device 50 can be received and information (signal) from the observation device 50 can be transmitted. For example, a signal that the observation device 50 (specifically, the observation control device 60) receives from the higher-level control device 53 is command information of an observation direction and information (for example, observation image, position information of a target, or the like) from another facility that performs observation (for example, the artificial satellite 4, a ground station, or the like). A signal that the observation device 50 (specifically, the observation control device 60) transmits to the higher-level control device 53 is image data acquired by observation, detection information of a target, status information (abnormality information) of various sensors, or the like.

The sensor system is a unit that performs observation. In the present embodiment, a case will be described where light (infrared rays or the like) from the observation direction (earth side) is detected to perform observation. The light may be visible light or invisible light. For example, since a target flying at high speed emits infrared rays, the target is detected.

Specifications of the sensor systems may be the same or different from each other. For example, a lens 33 may be selected to widen the observation range 3 as a sensor system suitable for searching, and a sensor system suitable for tracking may use a telephoto lens or the like for performing a detailed observation to narrow the observation range 3. In such a manner, even when the sensor systems are different from each other, the observation device 50 in the present embodiment is capable of comprehensively controlling the sensor systems.

As illustrated in Fig. 2, each of the sensor systems includes a mirror (reflection means) 31, a gimbal 32, the lens 33, a detector 34, a chiller 35, and a circuit unit 40. Fig. 2 illustrates a case where two sensor systems (sensor system #1 and sensor system #n) are provided; however, regarding the sensor systems, the number of the systems can be appropriately set, for example, a plurality of the systems (two or more systems) can be provided.

The mirror 31 is reflection means for guiding light from the observation direction to the detector 34. Namely, the mirror 31 reflects incident light and relays the light in a direction of the detector 34, so that the light from the observation range 3 is incident on the detector 34 through the mirror 31.

The gimbal 32 is a device that changes the angle of the mirror 31. Namely, the gimbal 32 changes the angle of a reflective surface of the mirror 31 to change an incoming direction of light to be guided to the detector 34. The angle of the gimbal 32 about a predetermined axis is adjustable.

Fig. 2 illustrates a case where one mirror 31 is used; however, a plurality of the mirrors 31 can also be provided. For example, when two mirrors 31 are used to guide light to the detector 34, each of the mirrors 31 is provided with the gimbal 32. Namely, the angle of each of a first reflective surface and a second reflective surface of the reflection means is controlled to guide light to the detector 34.

The lens 33 collects the light guided by the mirror 31 and guides the light to the detector 34. The lens 33 collects the light on a light-receiving portion (light-receiving surface) of the detector 34.

The detector 34 detects the light input through an optical system such as the mirror 31 and the lens 33. In the present embodiment, a case will be described where infrared rays are used as the light; however, the light is not limited to infrared rays. The detector 34 is, for example, an IR sensor (IR camera). Regarding the IR camera, an MCT type or the like is applicable, and the type is not limited.

In the detector 34, light from the observation range 3 that is an observation target is guided to the light-receiving portion via the optical system. The observation range 3 is a range in which detection can be performed at a time by the detector 34 (sensor system), and is set based on, for example, an instantaneous viewing angle. For example, when the instantaneous viewing angle is α°, the range of α° is the observation range 3 and light from the range can be detected. Pixels are arranged in a grid pattern in the light-receiving portion. For example, the pixels including several hundred pixels in column × several hundred pixels in row are disposed in a grid pattern according to a resolution set in advance. Then, when the light hits the light-receiving portion, an electric charge is generated in each pixel according to the intensity of the light (for example, the intensity of an infrared ray). Then, the magnitude of the electric charge generated in each pixel is detected as an electric signal, so that the intensity of the light at a position corresponding to each pixel can be obtained and the intensity of the light can be quantified and treated as image data. For example, when the intensity of an infrared ray is taken as an example, the position of a pixel in the light-receiving portion that is hit by a strong infrared ray can be displayed in white, and the position of a pixel in the light-receiving portion that is hit by a weak infrared ray can be displayed in black.

In such a manner, the detector 34 is capable of detecting the intensity of light from the observation range 3 for the position of each pixel. As will be described later, the detector 34 performs detection each time the observation range 3 is moved, and observation is performed in a wide range such as the scanning range 2 of Fig. 1.

The chiller 35 adjusts an environmental temperature of the detector 34. The sensitivity of the detector 34 increases when the environmental temperature is appropriate (for example, low temperature). For this reason, the chiller 35 adjusts the environmental temperature of the detector 34 to suppress a decrease in the sensitivity of the detector 34.

The circuit unit 40 controls and processes each part in the sensor system. For this reason, the circuit unit 40 includes a gimbal control circuit (gimbal control unit) 41, a chiller drive circuit (chiller drive unit) 44, a detector drive circuit (detector drive unit) 43, and a signal processing circuit (signal processing unit) 42.

The gimbal control circuit 41 drives the gimbal 32 to control the angle of the mirror 31. The gimbal control circuit 41 controls the angle of the mirror 31 according to the observation range 3 that is an observation target, so that light from the observation target can be reflected by the mirror 31 and guided to the detector 34. For example, the gimbal control circuit 41 operates based on a command from the observation control device 60.

The chiller drive circuit 44 drives the chiller 35 to control the temperature of the detector 34. For example, the chiller drive circuit 44 drives the chiller 35 such that the environmental temperature of the detector 34 is within a predetermined range. For example, the gimbal control circuit 41 operates based on a command from the observation control device 60.

The detector drive circuit 43 extracts an electric charge of each pixel in the detector 34. For example, the detector drive circuit 43 reads out the pixels row by row (or column by column), the pixels of a matrix of columns and rows being disposed in a grid pattern in the detector 34. Namely, the magnitude of the electric charge generated in each pixel is read out in connection with a row number and a column number. Then, the read-out electric charge is amplified in an amplification unit and is output to the signal processing circuit 42. For example, reading or the like is operated based on a command from the observation control device 60.

The signal processing circuit 42 detects the magnitude of the electric charge generated in each pixel of the detector 34. For example, the signal processing circuit 42 digitizes (quantifies) an electric charge amount (analog value) of each pixel that is read out (amplified) by the detector drive circuit 43. Then, numerical data is represented in light and shade (for example, black and white) in connection with a row number and a column number, and image data is generated. Namely, when strong light hits a pixel at a third row and a tenth column in the light-receiving portion of the detector 34, a position corresponding to the third row and the tenth column is displayed in white in the image data. Accordingly, it can be determined which position on the light-receiving portion is hit by strong light.

Then, the signal processing circuit 42 compares the numerical data with a threshold value to detect a target. A target may be detected based on an S/N ratio. For example, when a strong infrared ray is detected at the position of a pixel within a range corresponding to a first row and a second column in the entire image data, it can be estimated that an object (target) emitting strong infrared rays is present at a position within the observation range 3 corresponding to the position of the pixel.

Detection information of the target is output to, for example, the observation control device 60.

The observation control device 60 assigns a function to each of the sensor systems to comprehensively control the sensor systems.

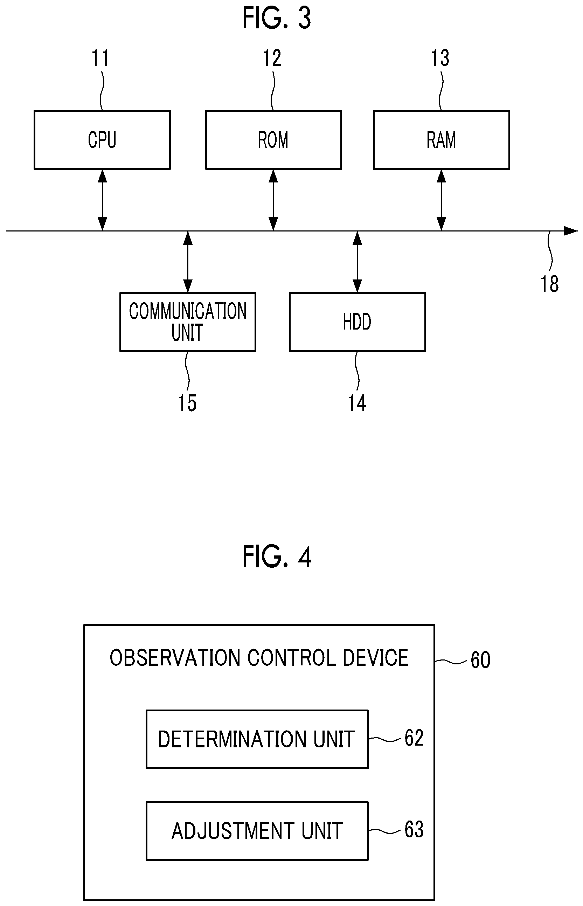

Fig. 3 is a diagram illustrating one example of a hardware configuration of the observation control device 60 according to the present embodiment.

As illustrated in Fig. 3, the observation control device 60 is a computer system (calculator system), and includes, for example, a CPU 11, a read only memory (ROM) 12 that stores programs and the like to be executed by the CPU 11, a random access memory (RAM) 13 that functions as a work region during execution of each program, a hard disk drive (HDD) 14 as a large-capacity storage device, and a communication unit 15 for connection to a network or the like. These parts are connected to each other via a bus 18. A device having another storage capacity such as a solid state drive (SSD) can also be used as a large-capacity storage device.

When the observation control device 60 is disposed on the ground (for example, a ground station), the observation control device 60 may include an input unit formed of a keyboard, a mouse, or the like, a display unit formed of a liquid crystal display device or the like that displays data, and the like.

The storage medium that stores the programs or the like to be executed by the CPU 11 is not limited to the ROM 12. For example, the storage medium may be other auxiliary storage devices such as a magnetic disk, a magneto-optical disk, and a semiconductor memory.

A procedure of a series of processes for realizing various functions to be described later are recorded in the hard disk drive 14 or the like in the form of a program, and the CPU 11 reads the program into the RAM 13 or the like and executes information processing and arithmetic processing to realize the various functions to be described later. In response to a case where the observation control device 60 is mounted in a spacecraft, a case where is mounted in a ground station, or the like, a form in which the program is installed in the ROM 12 or another storage medium in advance, a form in which the program is provided in a state where the program is stored in a computer-readable storage medium, a form in which the program is distributed via wired or wireless communication means, and the like may be applied. Examples of the computer-readable storage medium include magnetic disks, magneto-optical disks, CD-ROMs, DVD-ROMs, semiconductor memories, and the like.

As illustrated in Fig. 4, the observation control device 60 includes a determination unit 62 and an adjustment unit 63.

The determination unit 62 determines whether or not normal observation is feasible in each of the sensor systems. In other words, the determination unit 62 determines whether or not observation based on the function already set in each of the sensor systems is normally performed. For example, in a state where the sensor system #1 performs target tracking, the determination unit 62 determines whether or not the sensor system #1 is capable of performing target tracking. Namely, whether or not normal observation is feasible means whether or not observation can be performed without deficiency in a state where a function is assigned to each of the sensor systems.

Specifically, the determination unit 62 determines whether or not normal observation is feasible, based on at least one of whether or not an abnormality has occurred in each of the sensor systems and whether or not a function overflow has occurred in each of the sensor systems.

Whether or not an abnormality has occurred in each of the sensor systems means whether or not a malfunction has occurred in each of the sensor systems. The malfunction is, for example, a case where the gimbal 32 does not follow a command, and is detected by comparing an output of an angle detector attached to the gimbal 32 with a command value. The malfunction may be an element defect of the detector 34, and is detected by an image state acquired from the detector 34 (for example, a defective place lacks pixel information). The malfunction may be a deterioration in the reflection characteristic of the mirror 31 or a deterioration in the transmission characteristic of the lens 33, and is detected by an image state acquired from the detector 34 (for example, comparison with a reference image in which a characteristic deterioration does not occur). The malfunction may be a decrease (or inability) in the cooling performance of the chiller 35, and is detected by information of a temperature sensor provided in the chiller 35 or the detector 34. The malfunction may be a current abnormality (or voltage abnormality) of various circuits, and is detected by a sensor provided in a circuit. In such a manner, the determination unit 62 determines whether or not normal observation is feasible in each of the sensor systems, depending on whether or not an abnormality has occurred in each of the sensor systems.

Whether or not a function overflow has occurred in each of the sensor systems means whether or not the function is saturated and required observation is not sufficiently performed in each of the sensor systems (whether or not a performance limit is reached). Specifically, the function overflow means that a tracking resource is saturated in a state where the sensor system performs target tracking. The tracking resource is at least one of a tracking target number, a tracking cycle, and a distance between tracking objects. For example, when the tracking target number exceeds the performance of the sensor system, the tracking target number is saturated. The performance limit of target tracking is affected not only by the tracking target number but also by the tracking cycle. For example, the longer the tracking cycle (cycle for detecting a target) is, the more targets can be tracked. Since tracking involves movement of the observation range 3, the distance between tracking objects (plural of targets) also affects the performance limit. For this reason, the determination unit 62 determines a function overflow based on at least one of the tracking target number, the tracking cycle, and the distance between tracking objects. In such a manner, the determination unit 62 determines whether or not normal observation is feasible in each of the sensor systems, depending on whether or not a function overflow has occurred in each of the sensor systems.

The determination unit 62 performs a determination process on each of the sensor systems. Then, a determination result is output to the adjustment unit 63 to be described later.

The adjustment unit 63 adjusts a function assignment state for each of the sensor systems based on the determination result of the determination unit 62. Specifically, when it is determined that normal observation is not feasible in at least one of the sensor systems, the adjustment unit 63 adjusts an assignment state of a target searching function and/or a target tracking function for each of the sensor systems. The adjustment unit 63 assigns a function to each of the sensor systems capable of normally performing observation among the sensor systems.

A function of adjusting an assignment state is target searching and/or target tracking. Specific processes of target searching and target tracking will be described later. For example, when a sensor system A performs target searching and a sensor system B performs target tracking, if an abnormality occurs in the sensor system A, function assignment is performed such as causing the sensor system B to perform only target searching, to perform only target tracking, or to perform both target searching and target tracking. Even when both target searching and target tracking are performed, the target searching may be emphasized or the target tracking may be emphasized. Namely, even when any sensor system is not capable of performing normal observation, the adjustment unit 63 flexibly adjusts a function assignment state for each of the sensor systems such that a stable observation can be performed in collaboration with other sensor systems.

In order to adjust an assignment state, the adjustment unit 63 adjusts a detection cycle of target searching and/or target tracking for each of the sensor systems. The detection cycle of target searching is referred to as a searching cycle, and the detection cycle of target tracking is referred to as a tracking cycle. The searching cycle is a period (time) from when a predetermined range is searched to when searching is started again. The tracking cycle is a time from when detection for a target is performed to when detection for the target is performed again. Regarding the tracking cycle, when there are a plurality of targets, the tracking cycle may be set for each target, or the plurality of targets may be treated as a set, detection for the targets in the set may be performed, and the tracking cycle may be set to a time from when detection for each target included in the set is completed to when detection for each target in the set is started again.

The observation control device 60 controls each of the sensor systems to execute target searching and target tracking. Specifically, when the sensor system A is controlled to perform target searching and the sensor system is controlled to perform target tracking, a command is transmitted to each of the sensor system A and the sensor system B. For example, a command to start searching in a searching cycle T1 is transmitted to the sensor system A, and a command to start tracking in a tracking cycle T2 is transmitted to the sensor system B. Then, the gimbal and the like are controlled based on each command, and observation by each function is executed.

Namely, a function assignment state for each of the sensor systems can be adjusted by adjusting the searching cycle and/or the tracking cycle for each of the sensor systems. In other words, the function assignment state is adjusted for all the sensor systems (particularly, all the sensor systems capable of normally performing observation) as a resource.

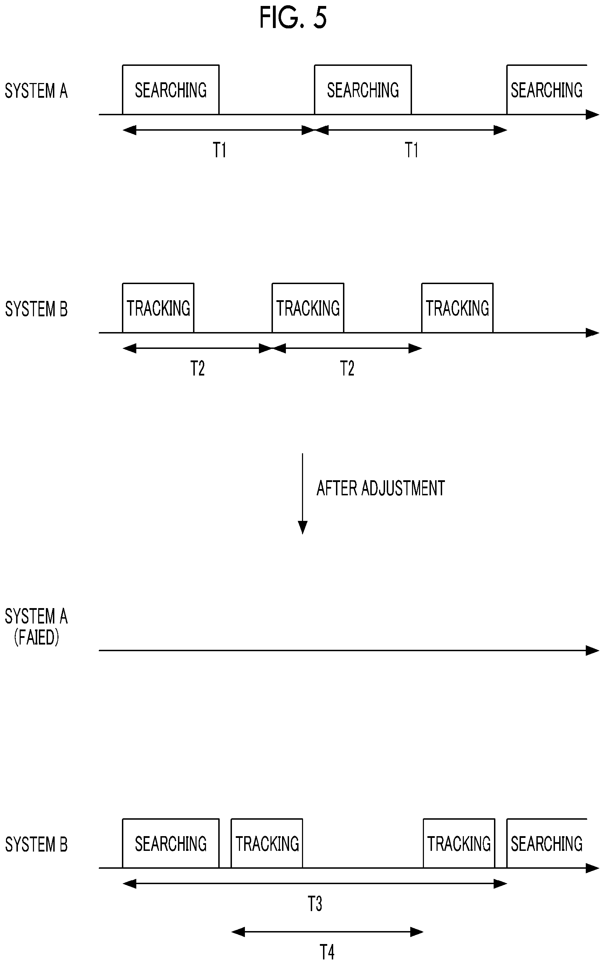

For example, a case is assumed where there are two systems such as the sensor system A and the sensor system B and as illustrated in Fig. 5, the sensor system A performs target searching and the sensor system B performs target tracking (function assignment state). Fig. 5 illustrates a case where the sensor system A performs searching in the searching cycle T1 and the sensor system B performs tracking in the tracking cycle T2. Then, when an abnormality occurs in the sensor system A and the sensor system A is not capable of performing target searching, the function assignment state is adjusted such the sensor system B performs target tracking in a tracking cycle T4 and performs target searching in a searching cycle T3. When adjustment is performed, the cycles (searching cycle and tracking cycle) may be changed or the tracking target number may be changed. Observation can be stably performed by adjusting a function assignment state in such a manner.

The adjustment unit 63 may acquire observation information outside an observable range of the sensor system, and adjust an assignment state based on the observation information. The observation information outside the observable range of the sensor system is, for example, information to be acquired from another facility that performs observation (for example, the artificial satellite 4, a ground station, or the like). When the observation information outside the observable range of the sensor system is acquired, for example, information indicating that a target flies from outside the observable range into the observable range, or information such as the number of flying objects can be used.

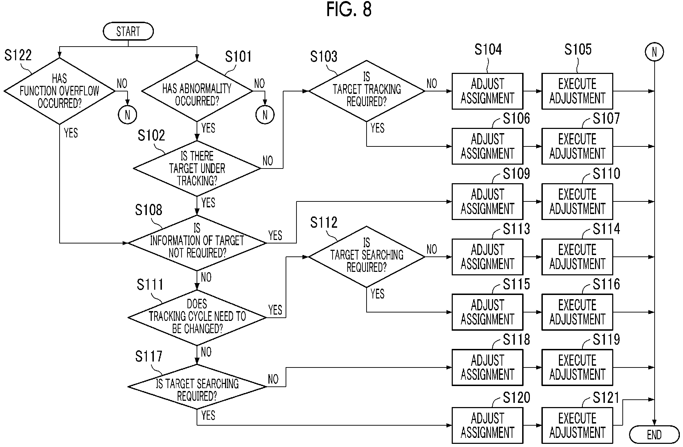

A more detailed process in the adjustment unit 63 will be described later with reference to Fig. 8. Briefly, when there is no target under tracking, the adjustment unit 63 determines whether or not there is a need to perform target tracking, and the adjustment unit 63 assigns the target searching function to each of the sensor systems when there is no need to perform target tracking, and assigns each of the target searching function and the target tracking function to each of the sensor systems when there is a need to perform target tracking. When there is a need to perform target tracking, the adjustment unit 63 assigns each of the target searching function and the target tracking function to each of the sensor systems with target searching prioritized over target tracking.

When there is a target under tracking, the adjustment unit 63 determines whether or not information of the target under tracking is required, and when the information of the target under tracking is not required, the adjustment unit 63 assigns each of the target searching function and the target tracking function to each of the sensor systems. When the information of the target under tracking is not required, the adjustment unit 63 assigns each of the target searching function and the target tracking function to each of the sensor systems with target searching prioritized over target tracking.

When the information of the target is required, the adjustment unit 63 determines whether or not the tracking cycle for tracking the target needs to be changed for each of the sensor systems in which normal observation is feasible. When the tracking cycle needs to be changed, the adjustment unit 63 determines whether there is a need to perform target searching, and the adjustment unit 63 assigns the target tracking function to each of the sensor systems when there is no need to perform target searching, and assigns each of the target searching function and the target tracking function to each of the sensor systems when there is a need to perform target searching. When there is a need to perform target searching, the adjustment unit 63 assigns each of the target searching function and the target tracking function to each of the sensor systems with target tracking prioritized over target searching.

When the tracking cycle does not need to be changed, the adjustment unit 63 determines whether or not there is a need to perform target searching, and the adjustment unit 63 assigns the target tracking function to each of the sensor systems when there is no need to perform target searching, and assigns each of the target searching function and the target tracking function to each of the sensor systems when there is a need to perform target searching. When there is a need to perform target searching, the adjustment unit 63 assigns each of the target searching function and the target tracking function to each of the sensor systems with target tracking prioritized over target searching.

Next, an example of the case of performing target searching will be described.

Searching is to search for a target. When searching is performed, the observation range 3 is moved, and the scanning range 2 is scanned. Namely, in searching, the observation range 3 is moved within the scanning range 2, and an entirety of the scanning range 2 is scanned and observed.

Fig. 6 is a diagram illustrating one example of a scanning pattern when searching is performed. In Fig. 6, as one example, the scanning range 2 is illustrated in a matrix of first to tenth rows and first to tenth columns, and the numbers of rows and columns are appropriately set according to specifications of the sensor system to be used. Namely, the scanning range 2 is generally represented as a matrix of m rows and n columns (m and n can be appropriately set). Also in Fig. 7 to be described later, the illustrated matrix is one example, and similarly to Fig. 6, the matrix of the scanning range 2 is appropriately set according to the specifications of the sensor system.

In order to observe the entirety of the scanning range 2, the observation range 3 is set at a start point (the first row and the first column in Fig. 6) of the scanning range 2, and observation is performed. After observation, the observation range 3 is moved in a vertical direction (direction perpendicular to a traveling direction), and observation is performed (the first row and the second column in Fig. 6). Since light from the observation range 3 is detected by the pixels disposed in a grid pattern in the detector 34, observation can be performed at a finer position (position of each pixel) within the observation range 3 (for example, the first row and the second column). In such a manner, the observation range 3 is moved in the vertical direction, and observation is performed at a position corresponding to each column at a specific row. When observation at the column ends (the first row and the tenth column in Fig. 6), the observation range 3 is moved in the traveling direction (traveling direction of the artificial satellite 1 and including a front-back direction of traveling) (from the second row and the tenth column to the second row and the first column in Fig. 6), and observation is performed a next row. The entirety of the scanning range 2 can be scanned by moving the observation range 3 in the vertical direction and in the traveling direction and by performing observation in such a manner. Image data of the entirety of the scanning range 2 can be obtained from image data of each of the observation ranges 3 by scanning the entirety of the scanning range 2.

The matrix range as illustrated in Fig. 6 (for example, a range corresponding to the first row and the second column) corresponds to the observation range 3. For this reason, the entirety of the scanning range 2 can be scanned by moving the observation range 3 according to the matrix. The matrix range may be set to a range smaller than the observation range 3. In this case, since the observation range 3 before movement and the observation range 3 after movement partially overlap each other, observation omission can be suppressed.

Each of the sensor systems performs target searching based on information obtained by moving the observation range 3 within the scanning range 2 as illustrated in Fig. 6, namely, based on all image data.

Next, an example of the case of performing target tracking will be described.

Tracking is to track a target detected in the scanning range 2. When tracking is performed, the observation range 3 is moved and target tracking is performed. In tracking, observation may be performed on the entirety of the scanning range 2, or observation may be performed on a range that is a part of the scanning range 2 and includes a position where the target is detected. In the present embodiment, a case will be described where a part of the scanning range 2 is observed to perform tracking.

Fig. 7 is a diagram illustrating one example of movement of the observation range 3 when tracking is performed. In Fig. 7, it is assumed that a target is detected in a specific range (point P at the third row and the fourth column) of the scanning range 2 by searching. In such a case, the observation range 3 is moved such that the detection position (point P) of the target is located at the center of the observation range 3. Then, observation (target detection) is performed again. In Fig. 7, an observation position before movement is indicated by G1 (3), and an observation position after movement for tracking is indicated by G2 (3). In such a manner, when the observation range 3 is moved such that the detection position (point P) of the target is located the center of the observation range 3, the observation range 3 can be moved in response to the movement of the target, and tracking can be performed. The tracking method can be adopted without being limited to the above example. In this way, image data of the observation range 3 including the target can be obtained.

Each of the sensor systems performs target tracking based on information obtained by moving the observation range 3 within the scanning range 2 as illustrated in Fig. 7, namely, the image data of the observation range 3 including the target.

Next, one example of observation control by the observation control device 60 described above will be described with reference to Fig. 8. Fig. 8 is a flowchart illustrating one example of a procedure of the observation control according to the present embodiment. The flow illustrated in Fig. 8 is repeatedly executed, for example, in a predetermined control cycle.

First, it is determined whether or not an abnormality has occurred in the sensor system (S101). When an abnormality has not occurred in the sensor system (determination of NO in S101), the process ends (process is executed again from S101 in the predetermined control cycle). Then, when an abnormality has occurred in the sensor system (determination of YES in S101), it is determined whether or not there is a target under tracking (S102). Whether or not there is a target under tracking means whether or not any sensor system executes target tracking in a stage before the abnormality has occurred in S101. When there is no target under tracking (determination of NO in S102), it is determined whether or not there is a need to perform target tracking (S103). In other words, in S103, it is determined whether or not the securing of a tracking resource is required. In S103, for example, the determination process may be performed based on an initial setting and the like for target tracking set in advance, or determination may be performed based on information from another facility that performs observation (for example, the artificial satellite 4, a ground station, or the like). For example, when a target is predicted to be likely to enter the scanning range 2 after a predetermined time from the information from another facility that performs observation, it is determined that there is a need to perform target tracking.

When there is no need to perform target tracking (determination of NO in S103), the searching cycle is calculated for each normal sensor system on the premise that target tracking is not performed (S104). Then, the target searching function is assigned to each of the sensor systems (S105). Namely, the calculated searching cycle is set for each normal sensor system, and observation is performed. Because of the premise that target tracking is not performed, for example, the searching cycle is set to be long and no tracking cycle is set (no tracking target number). Namely, according to S105, a searching priority mode is set.

When there is a need to perform target tracking (determination of YES in S103), the tracking cycle and the tracking target number are calculated for each normal sensor system with emphasis on searching (priority is given to target searching over target tracking) (S106). The searching cycle may be maintained or calculated for each normal sensor system. For example, the tracking cycle is set for each tracking object (equivalent to the tracking target number). In S106, for example, the process may be performed based on the initial setting and the like for target tracking set in advance, or determination may be performed based on the information from another facility that performs observation (for example, the artificial satellite 4, a ground station, or the like). For example, when the number of targets that are likely to enter the scanning range 2 after a predetermined time is predicted from the information from another facility that performs observation, the tracking target number is set based on the prediction.

Then, each of the target searching function and the target tracking function is assigned to each of the sensor systems (S107). Namely, the searching cycle and the tracking cycle are set for each normal sensor system, and observation is performed. Since searching is emphasized, for example, the searching cycle is set to be long and the tracking cycle is set to be short (tracking target number is small). Namely, according to S107, a searching emphasis mode is set in which both searching and tracking are performed.

When there is a target under tracking (determination of YES in S102), it is determined whether or not information (target information) of the target under tracking is required (S108). Whether or not the information of the target under tracking is required means whether or not information obtained by tracking observation is used in the artificial satellite 1 or another facility. For example, when tracking information observed by the artificial satellite 1 is used by a ground radar or the like, the information of the target under tracking is required. For this reason, in S108, for example, determination may be performed based on the information from another facility that performs observation (for example, the artificial satellite 4, a ground station, or the like).

When the information of the target under tracking is not required (determination of YES in S108), the tracking cycle and the tracking target number are calculated for each normal sensor system with emphasis on searching (priority is given to target searching over target tracking) (S109). The searching cycle may be maintained or calculated for each normal sensor system.

Then, each of the target searching function and the target tracking function is assigned to each of the sensor systems (S110). Namely, the searching cycle and the tracking cycle are set for each normal sensor system, and observation is performed. Since searching is emphasized, for example, the searching cycle is set to be long and the tracking cycle is set to be short (tracking target number is small). Namely, in S110, the searching emphasis mode is set in which both searching and tracking are performed. In the searching emphasis modes of S107 and S110 in which both searching and tracking are performed, since the tracking cycles and the like are calculated in the previous stage processes, the set tracking cycles and the like may be different from each other.

When the information of the target under tracking is required (determination of NO in S108), it is determined whether or not the tracking cycle for tracking the target needs to be changed for each of the sensor systems in which normal observation is feasible (S111). The case where the information of the target under tracking is required includes a case where the information is planned to be used (or is used) and a case where the information is required (case where it is unclear whether or not the information is used). Whether or not the tracking cycle for tracking the target needs to be changed for each of the sensor systems in which normal observation is feasible means whether or not tracking can be continuously performed in a setting state of the current tracking cycle.

When the tracking cycle needs to be changed (determination of YES in S111), it is determined whether or not there is a need to perform target searching (S112). In other words, in S112, it is determined whether or not the securing of a searching resource is required. In S112, for example, the determination process may be performed based on an initial setting and the like for target searching set in advance, or determination may be performed based on the information from another facility that performs observation (for example, the artificial satellite 4, a ground station, or the like). For example, when a target is predicted to be likely to enter the scanning range 2 after a predetermined time from the information from another facility that performs observation, it is determined that there is a need to perform target searching.

When there is no need to perform target searching (determination of NO in S112), the tracking cycle and the tracking target number are calculated for each normal sensor system (S113). In S113, for example, the process may be performed based on the initial setting and the like for target tracking set in advance, or determination may be performed based on the information from another facility that performs observation (for example, the artificial satellite 4, a ground station, or the like). For example, when the number of targets that are likely to enter the scanning range 2 after a predetermined time is predicted from the information from another facility that performs observation, the tracking target number is set based on the prediction.

Then, the target tracking function is assigned to each of the sensor systems (S114). Namely, the calculated tracking cycle is set for each normal sensor system, and observation is performed. For this reason, for example, no searching cycle is set and the tracking cycle is set to be short (tracking target number is large). Namely, according to S114, a tracking priority mode is set.

When there is a need to perform target searching (determination of YES in S112), the searching cycle is calculated for each normal sensor system with emphasis on tracking (priority is given to target tracking over target searching) (S115). The tracking cycle and the tracking target number may be maintained or calculated for each normal sensor system. In S115, for example, determination may be performed based on the information from another facility that performs observation (for example, the artificial satellite 4, a ground station, or the like).

Then, each of the target searching function and the target tracking function is assigned to each of the sensor systems (S116). Namely, the searching cycle and the tracking cycle are set for each normal sensor system, and observation is performed. Since tracking is emphasized, for example, the searching cycle is set to be short and the tracking cycle is set to be short (tracking target number is large). Namely, according to S116, a tracking emphasis mode is set in which both searching and tracking are performed.

When the tracking cycle does not need to be changed (determination of NO in S111), it is determined whether or not there is a need to perform a target searching (S117) . In other words, in S117, it is determined whether or not the securing of a searching resource is required. In S117, for example, the determination process may be performed based on the initial setting and the like for target searching set in advance, or determination may be performed based on the information from another facility that performs observation (for example, the artificial satellite 4, a ground station, or the like). For example, when a target is predicted to be likely to enter the scanning range 2 after a predetermined time from the information from another facility that performs observation, it is determined that there is a need to perform target searching.

When there is no need to perform target searching (determination of NO in S117), the tracking cycle and the tracking target number are calculated for each normal sensor system (S118). In S118, the tracking target number for which tracking can be performed may be calculated on the premise that the tracking cycle is maintained. Then, the target tracking function is assigned to each of the sensor systems (S119). Namely, the calculated tracking cycle is set for each normal sensor system, and observation is performed. For this reason, for example, no searching cycle is set and the tracking cycle is set to be long (tracking target number is large). Namely, according to S119, the tracking priority mode is set. In the tracking priority modes of S114 and S119, since the tracking cycle and the like are calculated in the previous stage processes, the set tracking cycles and the like may be different from each other.

When there is a need to perform target searching (determination of YES in S117), the searching cycle is calculated for each normal sensor system with emphasis on tracking (priority is given to target tracking over target searching) (S120). The tracking cycle and the tracking target number may be maintained or calculated for each normal sensor system. Then, the target scanning function and the target tracking function are assigned to each of the sensor systems (S121). Namely, the searching cycle and the tracking cycle are set for each normal sensor system, and observation is performed. Namely, according to S116, a tracking emphasis mode is set in which both searching and tracking are performed. In the tracking emphasis modes of S116 and S121 in which both searching and tracking are performed, since the tracking cycles and the like are calculated in the previous stage processes, the set tracking cycles and the like may be different from each other.

In such a manner, the function assignment state for each of the sensor systems is adjusted.

In parallel with S101, it is determined whether or not a function overflow has occurred in each of the sensor systems (S122). Similarly to S101, S122 is a process of determining whether or not normal observation is feasible in each of the sensor systems. When the function overflow has not occurred (determination of NO in S122), the process ends (process is executed again from S101 in the predetermined control cycle). When the function overflow has occurred (determination of YES in S122), the process of S108 is executed. Since processes following determination of YES in S122 cannot be handled in the current function assignment state, NO is determined in S111. Regarding the process of S122, the process of S102 may be executed in the case of determination of YES in S122.

As described above, according to the observation control device, the observation system, the spacecraft, the observation control method, and the observation control program in the present embodiment, even when there is a sensor system in which normal observation is not feasible among the plurality of sensor systems, an assignment state of the target searching function and/or the target tracking function is adjusted for each of the sensor systems, so that the target searching function and/or the target tracking function can be stably executed in the sensor systems as a whole. For example, even when an abnormality has occurred in a sensor system, the function assignment state is adjusted, so that the function can be entrusted to a normal sensor system and target searching and/or target tracking can be stably performed.

Whether or not normal observation is feasible in each of the sensor systems (namely, whether or not there is a need to adjust the function assignment state) can be effectively determined based on whether or not an abnormality has occurred in each of the sensor systems or whether or not a function overflow has occurred in each of the sensor systems. The function overflow means that the ability of tracking that can be handled by the sensor system responsible for target tracking is exceeded because of an increase in the number of targets.

The function assignment state can be adjusted in consideration of information outside the observation range by adjusting the assignment state based on the observation information outside the observable range of the sensor system. The observation information outside the observable range of the sensor system is acquired from, for example, another spacecraft, a ground station, or the like.

When there is no target under tracking and there is no need to perform target tracking, the target searching function is assigned to each of the sensor systems, so that observation can be performed with emphasis on target searching. Then, when there is no target under tracking and there is a need to perform target tracking, each of the target searching function and the target tracking function is assigned to each of the sensor systems, so that observation for both target searching and target tracking can be performed. When there is a need to perform target tracking, function assignment is performed with target searching prioritized over target tracking, so that observation for both the target searching and the target tracking can be performed with emphasis on the target searching.

Then, when there is a target under tracking and information of the target under tracking is not required, each of the target searching function and the target tracking function is assigned to each of the sensor systems, so that observation for both target searching and target tracking can be performed. When information of a target under tracking is not required, function assignment is performed with target searching prioritized over target tracking, so that observation for both the target searching and the target tracking can be performed with emphasis on the target searching.

When information of a target is required, the tracking cycle needs to be changed, and there is no need to perform target searching, the target tracking function is assigned to each of the sensor systems, so that observation can be performed with emphasis on target tracking. Then, when information of a target is required, the tracking cycle needs to be changed, and there is a need to perform target searching, each of the target searching function and the target tracking function is assigned to each of the sensor systems, so that observation for both target searching and target tracking can be performed. When there is a need to perform target searching, function assignment is performed with target tracking prioritized over target searching, so that observation for both the target searching and the target tracking can be performed with emphasis on the target tracking.

When the tracking cycle does not need to be changed and there is no need to perform target searching, the target tracking function is assigned to each of the sensor systems, so that observation can be performed with emphasis on target tracking. Then, when the tracking cycle does not need to be changed and there is a need to perform target searching, each of the target searching function and the target tracking function is assigned to each of the sensor systems, so that observation for both target searching and target tracking can be performed. When there is a need to perform target searching, function assignment is performed with target tracking prioritized over target searching, so that observation for both the target searching and the target tracking can be performed with emphasis on the target tracking.

The present disclosure is not limited to the above-described embodiment, and various modifications can be carried out without departing from the concept of the invention.

The observation control device, the observation system, the spacecraft, the observation control method, and the observation control program described in the above-described embodiment are comprehended, for example, as follows.

An observation control device (60) according to the present disclosure is applicable to a plurality of detection devices mounted in a spacecraft (1) to perform observation. The observation control device (60) includes a determination unit (62) that determines whether or not normal observation is feasible in each of the detection devices; and an adjustment unit (63) that adjusts an assignment state of a target searching function and/or a target tracking function for each of the detection devices when it is determined that normal observation is not feasible in at least one of the detection devices.

In the observation control device (60) according to the present disclosure, even when there is a detection device in which normal observation is not feasible among the plurality of detection devices, the assignment state of the target searching function and/or the target tracking function is adjusted for each of the detection devices, so that the target searching function and/or the target tracking function can be stably executed in the detection devices as a whole. For example, even when an abnormality has occurred in a detection device, the function assignment state is adjusted, so that the function can be entrusted to a normal detection device and target searching and/or target tracking can be stably performed.

In the observation control device (60) according to the present disclosure, the determination unit (62) may determine whether or not normal observation is feasible, based on at least one of whether or not an abnormality has occurred in each of the detection devices and whether or not a function overflow has occurred in each of the detection devices.

In the observation control device (60) according to the present disclosure, whether or not normal observation is feasible in each of the detection devices (namely, whether or not there is a need to adjust the function assignment state) can be effectively determined based on whether or not an abnormality has occurred in each of the detection devices or whether or not a function overflow has occurred in each of the detection devices. The function overflow means that the ability of tracking that can be handled by the detection device responsible for target tracking is exceeded because of an increase in the number of targets.

In the observation control device (60) according to the present disclosure, the function overflow may be determined based on at least one of a tracking target number, a tracking cycle, and a distance between tracking objects.

In the observation control device (60) according to the present disclosure, since target tracking has a capacity limitation depending on the tracking target number, the tracking cycle, and the distance between tracking objects, the function overflow can be determined based on at least one of the tracking target number, the tracking cycle, and the distance between tracking objects.

In the observation control device (60) according to the present disclosure, the adjustment unit (63) may adjust a detection cycle of target searching and/or target tracking for each of the detection devices to adjust the assignment state.

In the observation control device (60) according to the present disclosure, the function assignment state can be effectively adjusted for each of the detection devices by adjusting the detection cycle of target searching and/or target tracking.

In the observation control device (60) according to the present disclosure, the adjustment unit (63) may acquire observation information outside an observable range of the detection device, and adjust the assignment state based on the observation information.

In the observation control device (60) according to the present disclosure, the function assignment state can be adjusted in consideration of the information outside the observation range by adjusting the assignment state based on the observation information outside the observable range of the detection device. The observation information outside the observable range of the detection device is acquired from, for example, another spacecraft (1), a ground station, or the like.

In the observation control device (60) according to the present disclosure, when there is no target under tracking, the adjustment unit (63) may determine whether or not there is a need to perform target tracking, and the adjustment unit (63) may assign the target searching function to each of the detection devices when there is no need to perform target tracking, and assign each of the target searching function and the target tracking function to each of the detection devices when there is a need to perform target tracking.

In the observation control device (60) according to the present disclosure, when there is no target under tracking and there is no need to perform target tracking, the target searching function is assigned to each of the detection devices, so that observation can be performed with emphasis on target searching. Then, when there is no target under tracking and there is a need to perform target tracking, each of the target searching function and the target tracking function is assigned to each of the detection devices, so that observation for both target searching and target tracking can be performed.

In the observation control device (60) according to the present disclosure, when there is a need to perform target tracking, the adjustment unit (63) may assign each of the target searching function and the target tracking function to each of the detection devices with target searching prioritized over target tracking.

In the observation control device (60) according to the present disclosure, when there is a need to perform target tracking, function assignment is performed with target searching prioritized over target tracking, so that observation for both the target searching and the target tracking can be performed with emphasis on the target searching.

In the observation control device (60) according to the present disclosure, when there is the target under tracking, the adjustment unit (63) may determine whether or not information of the target under tracking is required, and when the information of the target under tracking is not required, the adjustment unit (63) may assign each of the target searching function and the target tracking function to each of the detection devices.

In the observation control device (60) according to the present disclosure, when there is the target under tracking and the information of the target under tracking is not required, each of the target searching function and the target tracking function is assigned to each of the detection devices, so that observation for both target searching and target tracking can be performed.

In the observation control device (60) according to the present disclosure, when the information of the target under tracking is not required, the adjustment unit (63) may assign each of the target searching function and the target tracking function to each of the detection devices with target searching prioritized over target tracking.

In the observation control device (60) according to the present disclosure, when the information of the target under tracking is not required, function assignment is performed with target searching prioritized over target tracking, so that observation for both the target searching and the target tracking can be performed with emphasis on the target searching.

In the observation control device (60) according to the present disclosure, when the information of the target is required, the adjustment unit (63) may determine whether or not a tracking cycle for tracking the target needs to be changed for each of the detection devices in which normal observation is feasible, and when the tracking cycle needs to be changed, the adjustment unit (63) may determine whether or not there is a need to perform target searching, and the adjustment unit (63) may assign the target tracking function to each of the detection devices when there is no need to perform target searching, and assign each of the target searching function and the target tracking function to each of the detection devices when there is a need to perform target searching.

In the observation control device (60) according to the present disclosure, when the information of the target is required, the tracking cycle needs to be changed, and there is no need to perform target searching, the target tracking function is assigned to each of the detection devices, so that observation can be performed with emphasis on target tracking. Then, when the information of the target is required, the tracking cycle needs to be changed, and there is a need to perform target searching, each of the target searching function and the target tracking function is assigned to each of the detection devices, so that observation for both target searching and target tracking can be performed.

In the observation control device (60) according to the present disclosure, when there is a need to perform target searching, the adjustment unit (63) may assign each of the target searching function and the target tracking function to each of the detection devices with target tracking prioritized over target searching.

In the observation control device (60) according to the present disclosure, when there is a need to perform target searching, function assignment is performed with target tracking prioritized over target searching, so that observation for both the target searching and the target tracking can be performed with emphasis on the target tracking.

In the observation control device (60) according to the present disclosure, when the tracking cycle does not need to be changed, the adjustment unit (63) may determine whether or not there is a need to perform target searching, and the adjustment unit (63) may assign the target tracking function to each of the detection devices when there is no need to perform target searching, and assign each of the target searching function and the target tracking function to each of the detection devices when there is a need to perform target searching.

In the observation control device (60) according to the present disclosure, when the tracking cycle does not need to be changed and there is no need to perform target searching, the target tracking function is assigned to each of the detection devices, so that observation can be performed with emphasis on target tracking. Then, when the tracking cycle does not need to be changed and there is a need to perform target searching, each of the target searching function and the target tracking function is assigned to each of the detection devices, so that observation for both target searching and target tracking can be performed.

In the observation control device (60) according to the present disclosure, when there is a need to perform target searching, the adjustment unit (63) may assign each of the target searching function and the target tracking function to each of the detection devices with target tracking prioritized over target searching.

In the observation control device (60) according to the present disclosure, when there is a need to perform target searching, function assignment is performed with target tracking prioritized over target searching, so that observation for both the target searching and the target tracking can be performed with emphasis on the target tracking.

An observation system (50) according to the present disclosure includes: a plurality of detection devices; and the above observation control device (60).

A spacecraft (1) according to the present disclosure includes the above observation system (50).

An observation control method according to the present disclosure is applicable to a plurality of detection devices mounted in a spacecraft (1) to perform observation. The observation control method includes: a step of determining whether or not normal observation is feasible in each of the detection devices; and a step of adjusting an assignment state of a target searching function and/or a target tracking function for each of the detection devices when it is determined that normal observation is not feasible in at least one of the detection devices.

An observation control program according to the present disclosure is applicable to a plurality of detection devices mounted in a spacecraft (1) to perform observation. The observation control program causes a computer to execute a process of determining whether or not normal observation is feasible in each of the detection devices; and a process of adjusting an assignment state of a target searching function and/or a target tracking function for each of the detection devices when it is determined that normal observation is not feasible in at least one of the detection devices.

### Reference Signs List

- 1:: Artificial satellite (spacecraft)
- 2:: Scanning range
- 3:: Observation range
- 4:: Artificial satellite
- 11:: CPU
- 12:: ROM
- 13:: RAM
- 14:: Hard disk drive
- 15:: Communication unit
- 18:: Bus
- 31:: Mirror
- 32:: Gimbal
- 33:: Lens
- 34:: Detector
- 35:: Chiller
- 40:: Circuit unit
- 41:: Gimbal control circuit
- 42:: Signal processing circuit
- 43:: Detector drive circuit
- 44:: Chiller drive circuit
- 50:: Observation device
- 51:: Power supply circuit
- 52:: Bus unit
- 53:: Higher-level control device
- 60:: Observation control device
- 62:: Determination unit
- 63:: Adjustment unit
- E:: Earth
- O:: Trajectory

## Claims

1. An observation control device that is applicable to a plurality of detection devices mounted in a spacecraft to perform observation, the device comprising:
a determination unit that determines whether or not normal observation is feasible in each of the detection devices; and
an adjustment unit that adjusts an assignment state of a target searching function and/or a target tracking function for each of the detection devices when it is determined that normal observation is not feasible in at least one of the detection devices.

2. The observation control device according to claim 1,
wherein the determination unit determines whether or not normal observation is feasible, based on at least one of whether or not an abnormality has occurred in each of the detection devices and whether or not a function overflow has occurred in each of the detection devices.

3. The observation control device according to claim 2,
wherein the function overflow is determined based on at least one of a tracking target number, a tracking cycle, and a distance between tracking objects.

4. The observation control device according to any one of claims 1 to 3,
wherein the adjustment unit adjusts a detection cycle of target searching and/or target tracking for each of the detection devices to adjust the assignment state.

5. The observation control device according to any one of claims 1 to 4,
wherein the adjustment unit acquires observation information outside an observable range of the detection device, and adjusts the assignment state based on the observation information.

6. The observation control device according to any one of claims 1 to 5,
wherein when there is no target under tracking, the adjustment unit determines whether or not there is a need to perform target tracking, and the adjustment unit assigns the target searching function to each of the detection devices when there is no need to perform target tracking, and assigns each of the target searching function and the target tracking function to each of the detection devices when there is a need to perform target tracking.

7. The observation control device according to claim 6,
wherein when there is a need to perform target tracking, the adjustment unit assigns each of the target searching function and the target tracking function to each of the detection devices with target searching prioritized over target tracking.

8. The observation control device according to claim 6 or 7,
wherein when there is the target under tracking, the adjustment unit determines whether or not information of the target under tracking is required, and when the information of the target under tracking is not required, the adjustment unit assigns each of the target searching function and the target tracking function to each of the detection devices.

9. The observation control device according to claim 8,
wherein when the information of the target under tracking is not required, the adjustment unit assigns each of the target searching function and the target tracking function to each of the detection devices with target searching prioritized over target tracking.

10. The observation control device according to claim 8 or 9,
wherein when the information of the target is required, the adjustment unit determines whether or not a tracking cycle for tracking the target needs to be changed for each of the detection devices in which normal observation is feasible, and when the tracking cycle needs to be changed, the adjustment unit determines whether or not there is a need to perform target searching, and the adjustment unit assigns the target tracking function to each of the detection devices when there is no need to perform target searching, and assigns each of the target searching function and the target tracking function to each of the detection devices when there is a need to perform target searching.

11. The observation control device according to claim 8,
wherein when there is a need to perform target searching, the adjustment unit assigns each of the target searching function and the target tracking function to each of the detection devices with target tracking prioritized over target searching.

12. The observation control device according to claim 10 or 11,
wherein when the tracking cycle does not need to be changed, the adjustment unit determines whether or not there is a need to perform target searching, and the adjustment unit assigns the target tracking function to each of the detection devices when there is no need to perform target searching, and assigns each of the target searching function and the target tracking function to each of the detection devices when there is a need to perform target searching.

13. The observation control device according to claim 12,
wherein when there is a need to perform target searching, the adjustment unit assigns each of the target searching function and the target tracking function to each of the detection devices with target tracking prioritized over target searching.

14. An observation system comprising:
a plurality of detection devices; and
the observation control device according to any one of claims 1 to 13.

15. A spacecraft comprising:
the observation system according to claim 14.

16. An observation control method that is applicable to a plurality of detection devices mounted in a spacecraft to perform observation, the method comprising:
a step of determining whether or not normal observation is feasible in each of the detection devices; and
a step of adjusting an assignment state of a target searching function and/or a target tracking function for each of the detection devices when it is determined that normal observation is not feasible in at least one of the detection devices.

17. An observation control program that is applicable to a plurality of detection devices mounted in a spacecraft to perform observation, the program causing a computer to execute:
a process of determining whether or not normal observation is feasible in each of the detection devices; and
a process of adjusting an assignment state of a target searching function and/or a target tracking function for each of the detection devices when it is determined that normal observation is not feasible in at least one of the detection devices.
